# EUROPEAN PATENT APPLICATION

(11) **EP 1 880 872 A2**
(43) Date of publication of application: **23.01.2008**
(21) Application number: 07012581.0
(22) Date of filing: 27.06.2007
(51) Int. Cl.: B60C 23/04

(54) **Tire state monitoring apparatus**

(30) Priority: 21.07.2006 JP 2006199601
(71) Applicant: ALPS ELECTRIC CO., LTD., Tokyo 145-8501 (JP)
(72) Inventor: Tamagawa, Kenichi, Tokyo 145-8501 (JP); Hayasaka, Satoshi, Tokyo 145-8501 (JP)
(74) Representative: Klunker . Schmitt-Nilson . Hirsch

(57) **Abstract**

In order to appropriately monitor the tire state by reducing the cost for coaxial cables and avoiding complicatedness accompanying with the wiring work of the coaxial cable, there is provided a tire monitoring apparatus includes transponders mounted in a plurality of tires of a vehicle; a plurality of ECUs disposed in a body of the vehicle and acquiring data representing tire states from the transponders; and a master ECU connected to the plurality of ECUs through a bus. The ECU includes An RF circuit communicating with the transponder; an antenna connected to the RF circuit; and a ROM recording the waiting time, until communicating with the corresponding transponder, differing from those of other ECUs. At the time of monitoring the tire state, the ECU communicates with the corresponding transponder after the waiting time elapses, acquires the data representing the tire state, and outputs the data to the master ECU.

## Description

This application claims the benefit of Japanese Patent Application No. 2006-199601 July 21, 2006, which is hereby incorporated by reference.

### BACKGROUND OF THE INVENTION

### 1. Field of the Invention

The present invention relates to a tire state monitoring apparatus monitoring a tire state, and more particularly, to a tire state monitoring apparatus capable of monitoring a state such as pressure of tires used in vehicles or the like.

### 2. Description of the Related Art

A tire state monitoring apparatus monitoring a state such as pressure of tires of vehicles has been developed so as to enhance the safety of vehicles at the time of driving. For example, a tire state monitoring apparatus including transponders provided in four tires of vehicles respectively; and four antennas corresponding to the transponders and a transceiver connected to the antennas provided in the vehicle, in which times when a call-radio waves are transmitted from the transceiver to the transponders differ from one another, has been proposed. An example is disclosed in Japanese Unexamined Patent Application Publication No. 2004-314893. In this tire state monitoring apparatus, it is possible to receive the data appropriately representing the tire state from the transceiver by avoiding interference between the data transmitted from the transponders by radio.

In the known tire state monitoring apparatus described above, in order to reduce the influence due to noises, the plural antennas and transceiver provided in the vehicle are connected to each other by coaxial cables. In this case, since the relatively long four coaxial cables connected between the transceivers and the antennas are necessary, the cost for the coaxial cables increases. Accordingly, there is a problem that the cost of manufacturing the apparatus increases. In addition, since it is difficult to draw the coaxial cables themselves, there is a problem that it is complicated to dispose the coaxial cables.

### SUMMARY OF THE INVENTION

The invention has been made to solve the above-mentioned problems, and an object of the invention is to provide a tire state monitoring apparatus for reducing the cost for the coaxial cables and appropriately monitoring the tire state by avoiding the complicatedness in the coaxial cable wiring work.

There is provided a tire state monitoring apparatus including transponders mounted in a plurality of tires of a vehicle; a plurality of sub-controllers disposed in a body of the vehicle and acquiring data representing a tire state from the corresponding transponder; and a main controller connected to the plurality of sub-controllers through communication lines. The sub-controller includes a communication unit communicating with the corresponding transponder; an antenna connected to the communication unit; and a memory recording the waiting time, until communicating with the corresponding transponder, differing from those of other sub-controllers. The plurality of sub-controllers each communicate with the corresponding transponder after the waiting time elapses, acquire the data representing the tire state, and output the data to the main controller, at the time of monitoring the tire state.

In the tire state monitoring apparatus, since the sub-controller having the antenna communicates with the transponder and the sub-controller and the main controller are connected to each other through the communication line, it is possible to shorten the length of the coaxial cable between the antenna and the communication unit. Accordingly, it is possible to reduce the cost for the coaxial cable and avoid the complicatedness in the coaxial cable wiring work.

At the time of monitoring the tire state, the waiting time setting in the sub-controller, differing from those of other sub-controllers, elapses and then the sub-controller communicates with the corresponding transponder to acquire the data representing the tire state. Accordingly, even when the data representing the tire state is received from the transponder by using the plurality of sub-controllers, it is possible to appropriately monitor the tire state.

In the tire state monitoring apparatus, the sub-controller may acquire the data representing the tire state by communicating with the corresponding transponder after the waiting time elapses from a time point when receiving a synchronization signal outputted from the main controller. In this case, the lapse of the waiting time is calculated on the basis of the synchronization signal from the main controller. Accordingly, even when the data representing the tire state is received from the transponder by using the plurality of sub-controllers, it is possible to accurately monitor the tire state without buffering of the communication of the sub-controllers.

Particular, the waiting time may be set to be a period of time by which the communication of the sub-controller does not interfere with those of other sub-controllers. In this case, while the communication of the sub-controller is performed, the interference with the communications of other sub-controllers is prevented. Accordingly, it is possible to prevent the situation where the date representing the tire state is not received due to the interference.

In the tire state monitoring apparatus, the sub-controller may communicate with the corresponding transponder plural times within one communication period and modify intervals of the communication performed within the one communication period. Since the interval of the communication performed within one communication period is variable, it is possible to appropriately monitor the tire state while corresponding to a variety of situation variation in the vehicle in a flexible manner.

For example, the synchronization signal may be a vehicle-speed data signal and the sub-controller may modify the intervals of the communication performed within the one communication period on the basis of the vehicle-speed data of the vehicle-speed data signal transmitted from the main controller. In this case, since the interval of the communication performed within one communication period varies on the basis of the vehicle-speed data, it is possible to appropriately monitor the tire state while corresponding to a variety of situation variation in the vehicle in a flexible manner.

Particularly, the sub-controller may decrease the intervals of the communication performed within the one communication period when the value of the vehicle-speed data is larger than a predetermined value and may increase the intervals of the communication performed within the one communication period when the value of the vehicle-speed data is smaller than the a predetermined value.

According to the invention, the cost for coaxial cable is reduced and the complicatedness in the coaxial cable wiring work is avoided, thereby appropriately monitoring the tire state.

### BRIEF DESCRIPTION OF THE DRAWINGS

Fig. 1 is a schematic diagram illustrating the whole configuration of a tire state monitoring apparatus according to an embodiment of the invention.
Fig. 2 is a functional block diagram illustrating a configuration of an ECU of the tire state monitoring apparatus according to the embodiment.
Fig. 3 is a sequential diagram illustrating the operation of the tire state monitoring apparatus when the tire state monitoring apparatus according to the invention monitors the states of tires.

### DESCRIPTION OF THE PREFERRED EMBODIMENT

Hereinafter, an embodiment of the invention will be described with reference to the attached drawings.

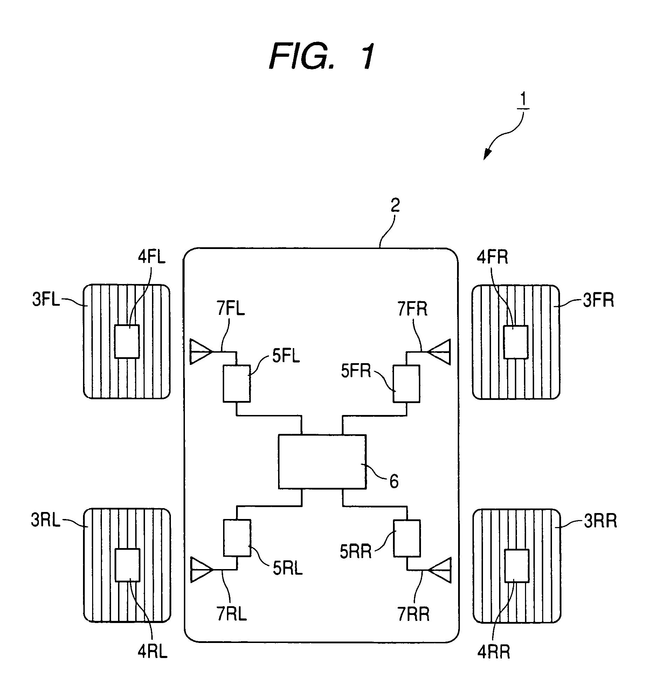

Fig. 1 is a schematic diagram illustrating an overall configuration of a tire state monitoring apparatus according to an embodiment of the invention. In Fig. 1, the upper portion shown in the same Fig. 1 is defined as the front of a vehicle and the lower portion shown in the same Fig. 1 is defined as the rear of the vehicle.

As shown in Fig. 1, a tire state monitoring apparatus 1 according to the embodiment includes transponders 4FL, 4FR, 4RL, and 4RR mounted in tires 3FL, 3FR, 3RL, and 3RR constituting front, rear, left, and right wheels (front left wheel: FL, front right wheel: FR, rear left wheel: RL, and rear right: RR) of a vehicle 2 or the like, ECUs (electronic control unit) 5FL, 5FR, 5RL, and 5RR provided in the vehicle 2 corresponding to the transponders 4FL to 4FR, and a master ECU 6 connected to the ECUs 5FL to 5RR. The ECUs 5FL to 5RR serves as sub-controllers and the master ECU 6 serves as main controller.

Each of the transponders 4FL to 4RR includes a pressure sensor measuring each pressure of the tires 3FL to 3RR and a resonator in which a resonant frequency varies on the basis of the pressure measured by the pressure sensor. When the resonator resonates at the resonance frequency based on the current pressure on the basis of an excitation signal from the ECUs 5FL to 5RR, the resonance signal as tire state data is transmitted to the ECUs 5FL to ECU 5RR.

In the embodiment, the case where each of the transponders 4FL to 4RR measures each pressure of the tires 3FL to 3RR as the tire state is described, but the object measured as the tire state is not limited thereto and may be modified appropriately. For example, the temperature of the tire may be measured.

The ECUs 5FL to 5RR transmit electric waves (hereinafter, referred to as 'excitation signal') with predetermined frequencies to the corresponding transponders 4FL to 4RR respectively and include antennas 7FL to 7RR used for receiving resonance signals (tire state data) transmitted from the transponders 4FL to 4RR, respectively.

The master ECU 6 is connected to the ECUs 5FL to 5RR through communication lines. The master ECU 6 controls the ECUs 5FL to 5RR. Specifically, the master ECU 6 transmits inquiry signals and vehicle-speed data signals including vehicle-speed data to the ECUs 5FL to 5RR and acquires information such as the pressures of tires 3FL to 3RR evaluated from ECU 5FL to 5RR on the basis of tire state data.

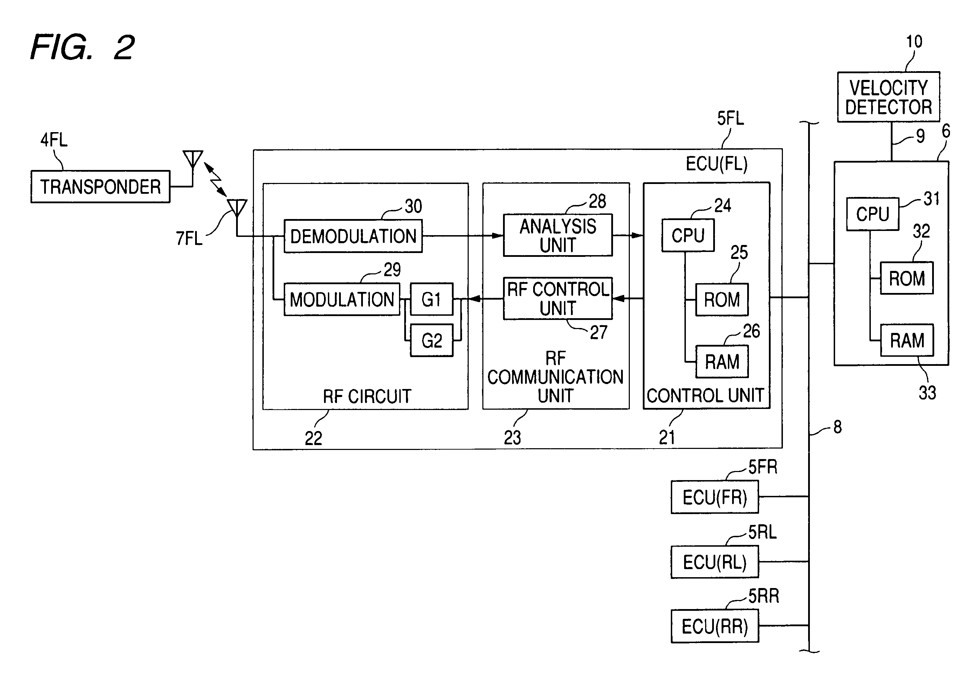

Fig. 2 is a functional block diagram illustrating a configuration of the ECU 5 of the tire state monitoring apparatus 1 according to the embodiment. In Fig. 2, only functional block of the ECU 5FL is shown, but the functional blocks of the other ECUs 5FR to 5RR are the same as that of the ECU 5FL.

As shown in Fig. 2, the ECUs 5FL to 5RR are connected to the master ECU 6 through a bus 8 for a serial communication. Similarly, the master ECU 6 is connected to a detection unit detecting a variety of information in the vehicle 2 through the bus 9 for the serial communication. In Fig. 2, the case where the master ECU 6 is connected to a speed detector 10 detecting the driving speed of the vehicle 2 is shown.

The bus 8 is constructed, for example, by using LIN (Local Interconnect Network) and the bus 9 is constructed, for example, by using CAN (Controller Area Network). As described above, since the network between the ECUs 5FL to 5RR and the master ECU 6 is constructed by the LIN and the network between the master ECU 6 and the speed detector 10 is constructed by the CAN, the cost for the connection between the master ECU 6 and the ECUs 5FL to 5RR can be reduced and a high real-time process can be performed between the master ECU6 and the speed detector 10. In addition, the master ECU 6 communicates with other controllers ECU (not shown) in the vehicle 2 through the CAN.

The ECU 5FL includes a control unit 21 controlling the whole ECU 5FL, an RF circuit 22 performing a radio communication with the transponder 4FL through the antenna 7FL, and an RF communication unit 23 controlling the RF circuit 22 on the basis of the instruction from the control unit 21 and analyzes the signal from the RF circuit 22.

The control unit 21 includes, for example, a CPU 24 controlling the whole ECU 5FL and a ROM 25 and a RAM 26 connected to the CPU 24. A control program read by the CPU 24 for controlling the ECU 5FL is stored in the ROM 25. The RAM 26 is used as the work area when the CPU 24 executes the control program in the ROM 25.

Particularly, a control program for transmitting the excitation signal to the transponder 4FL on the basis of the vehicle-speed data signal from the master ECU 6 is stored in the ROM 25. In the control program, the excitation signal is set to be transmitted after a predetermined waiting time elapses from when the vehicle-speed data signal is received from the master ECU 6. The vehicle-speed data signal serves as the synchronization signal.

Herein, the waiting times until the transmission of the excitation signal are set to differ from one another depending on the ECUs 5FL to 5RR. Specifically, a waiting time of 0 ms is set in the ECU 5FL, a waiting time of 5 ms is set in the ECU 5FR, a waiting time of 10 ms is set in the ECU 5RL, and a waiting time of 15 ms is set in the ECU 5RR. As described above, the reason for setting the waiting times differently depending on the ECUs 5FL to 5RR is to avoid the situation where the tire state data transmitted with a radio from the transponders 4FL to 4RR interferes with each other.

As described below, a control program for modifying intervals of the excitation signals transmitted to the transponder 4FL on the basis of the vehicle-speed data of the vehicle-speed data signal is stored in the ROM 25. Specifically, the control program modifying the intervals of the excitation signal transmitted to be short when the vehicle-speed data is a high speed and modifying the intervals of the excitation signal transmitted to be long when the vehicle-speed data is a low speed is stored. The reason for modifying the intervals of the excitation signal transmitted on the basis of the vehicle-speed data is to avoid the situation where the tire state data cannot be appropriately received with the change in rotation speed of the tire 3FL.

The RF communication unit 23 includes an RF control unit 27 receiving control parameters sent to and received from the control unit 21 and controlling the RF circuit 22 on the basis of the contents of the control parameters, and an analysis unit 28 analyzing the contents of the resonance signal (demodulation signal) demodulated in the RF circuit 22 and outputting the frequency data (resonance frequency data) to the control unit 21.

The RF circuit 22 includes a carrier wave oscillator G1 generating a carrier wave, an excitation signal oscillator G2 generating an excitation signal, a modulator 29 modulating the carrier wave to the excitation signal, and a demodulator 30 demodulating the modulation signal from the transponder 4FL. The excitation signal oscillator G2 generates the excitation signal of the frequency in the vicinity of the resonance frequency of the resonator of the transponder 4FL. The carrier wave modulated by the excitation signal is transmitted to the transponder 4FL through the antenna 7FL.

Herein, the antenna 7FL is connected to the RF circuit 22 through the coaxial cable. In the tire state monitoring apparatus 1 according to the embodiment, since the ECU 5FL is disposed in the vicinity of the tire 3FL unlike the case of the known tire state monitoring apparatus, the antenna 7FL is connected to the RF circuit 22 by using a relatively short coaxial cable. Accordingly, the situation where the cost needed for the coaxial cable increases like the known tire state monitoring apparatus is avoided.

In this ECU 5FL, when the tire state of the tire 3FL is monitored, the carrier wave modulated by the excitation signal from the excitation signal oscillator G2 is transmitted from the RF circuit 22 to transponder 4FL during a predetermined period under the control of the RF controller 27, and then the non-modulated carrier wave is transmitted to the transponder 4FL during a predetermined period. As described above, the excitation signal is transmitted as the modulation signal.

When the resonator of the transponder 4FL resonates on the basis of the excitation signal, the RF circuit 22 receives the signal (re-modulation signal) in which the carrier wave is modulated to the resonance frequency of the resonator from the transponder 4FL during the transmission period of the non-modulation carrier wave. The re-modulation signal is demodulated in the demodulator 30 and then is outputted to the analysis unit 28. The contents of the demodulation signal are analyzed by the analysis unit 28 and then are outputted to the control unit 21 as the resonance frequency (resonance frequency data) of the resonator.

The control unit 21 evaluates the pressure of the tire 3FL on the basis of the resonance frequency. The control unit 21 stores the data representing the pressure of the tire in the RAM 26. When the control unit 21 evaluates the pressure of the tire 3FL, it is preferable to evaluate the pressure of the tire 3FL with reference to a table in which the pressure of tire 3 corresponds to the resonance frequency.

The master ECU 6 includes, for example, a CPU 31 controlling the whole master ECU 6 and a ROM 32 and a RAM 33 connected to the CPU 31. The control program read by the CPU 31 for controlling the master ECU 6 is stored in the ROM 32. The RAM 33 is used as the work area for the case where the CPU 31 executes the control program in the ROM 32. For example, the control program transmitting the vehicle-speed data signal as the reference of time to transmit the excitation signal from each of ECU 5FL to 5RR is stored in the ROM 32.

In the embodiment, the master ECU 6 transmits the vehicle-speed data signal and allows each ECU 5FL to 5RR to modify the transmission internals of the excitation signal based on the vehicle-speed data. The master ECU 6 transmits the inquiry signal to each ECU 5FL to 5RR at a predetermined time. The ECU receiving the inquiry signal reads the data representing the pressure of the tire stored in the RAM 26 and transmits the data to the master ECU 6 as a signal.

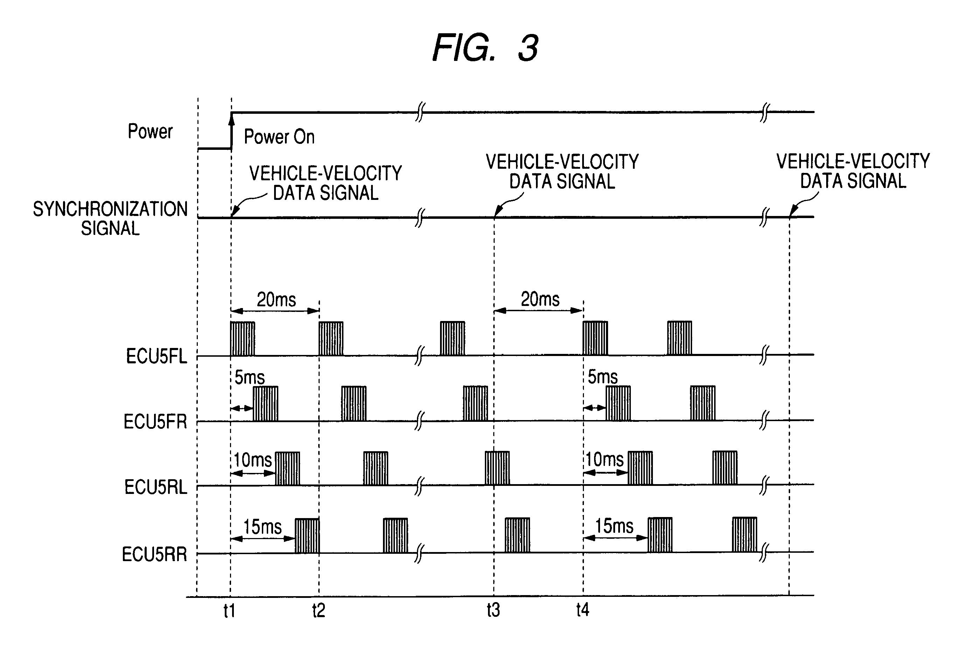

Next, in the tire state monitoring apparatus 1 according to the embodiment, the operation in case of monitoring the tire state of each tire 3FL to 3RR will be described with reference to Fig. 3. Fig. 3 a sequence diagram illustrating the operation in case of monitoring the tire state of each tire 3FL to 3RR in the tire state monitoring apparatus 1 according to the embodiment. In Fig. 3, the operation in case of monitoring the tire states of the tires 3FL to 3RR from time when the power supply of the vehicle 2 is activated by an ignition switch is illustrated.

As shown in Fig. 3, at a time point t1, when the power supply of the vehicle 2 is activated by the ignition switch, the vehicle-speed data signals serving as the synchronization signal are outputted from the master ECU 6 to ECUs 5FL to 5RR. When the vehicle-speed data signals are received, the ECUs 5FL to 5RR transmit the excitation signals to the corresponding transponders 4FL to 4RR after lapse of the waiting time assigned for each ECU.

When the ECU 5FL receives the vehicle-speed data signal, the ECU 5FL transmits the excitation signal after lapse of the waiting time of 0 ms, that is, without lapse of the waiting time. After the ECU 5FR receives the vehicle-speed data signal, the ECU 5FR transmits excitation signal after lapse of the waiting time of 5 ms. Similarly, after the ECU 5RL and 5RR receive the vehicle-speed data signals, the excitation signals transmit after lapse of the waiting time of 10 ms and 15 ms, respectively. That is, each ECU is configured to transmit the excitation signal at interval of 5 ms.

After the vehicle-speed data signal is received, each of the ECUs 5FL to 5RR transmits the excitation signal again after lapse of the time of 20 ms from the transmitting time of the excitation signal at previous time except for the case where the vehicle-speed data signal is received again. For example, ECU 5FL transmits the excitation signal again at a time point t2 when the 20 ms elapses from the time point t1. The other ECUs 5FR to 5RR are operated in the same manner.

Meanwhile, in a case where the vehicle-speed data signal is received from the master ECU 6, 20 ms elapses from the receiving time and then each of the ECUs 5FL to 5RR transmits the excitation signal to the corresponding transponder 4FL to 4RR after the waiting time assigned for the ECU itself elapse. For example, at a time point t3, in a case where vehicle-speed data signal is received from the master ECU 6 again, ECUs 5FL to 5RR transmit the excitation signals to the corresponding transponders 4FL to 4RR respectively, after the waiting time assigned for the ECU itself elapses from a time point t4 when 20 ms elapses from the time point t3.

In a case where any one of the ECUs 5FL to 5RR transmits the excitation signal at the time point of receiving the vehicle-speed data signal from the master ECU 6 again, the transmitting process continues until the ECU 5RR completes to transmit the last excitation signal. Accordingly, the transmitting process is not interrupted in the ECUs 5FL to 5RR.

As described above, the vehicle-speed data signal serves as the synchronization signal. Each of the ECUs 5FL to 5RR adjusts the transmitting time of the excitation signal on the basis of the waiting time assigned for each ECU. Generally, this waiting time is measured by a time measuring system including an inner clock of the ECU. A little nonuniformity exists in the time measuring system due to each ECU. Accordingly, when a long time elapses, the transmitting time of the excitation signal of each ECU is out of the interval of 5 ms set as described above. In order to correct this error, the synchronization signal has a function for initializing the start of the waiting time.

In the above description, it is described that the vehicle-speed data signal is used as the synchronization signal. The synchronization signal may be a signal only for synchronization, and another signal may be used as the synchronization signal. When the vehicle-speed data signal is referred to as the synchronization signal, there is an advantage that special separate synchronization signal may not be provided.

In the tire state monitoring apparatus 1 according to the embodiment, actually, the excitation signals is transmitted plural times within the one transmission period of each of the ECUs 5FL to 5RR. The reason is that at least one of the transmissions of the plurality of excitation signals should be surely completed since the position relation between the ECU and the transponder varies from time to time due to the rotation of the tire and the communicable position and non-communicable position exist. The completion of communication described herein means that the excitation signal as the modulation signal is transmitted, the non-modulated carrier wave is transmitted, and then the signal of the carrier wave modulated in accordance with the resonance frequency of the resonator during the transmitting period of the non-modulated carrier wave is received as described above. The transmission interval performed within one transmission period is changeable.

In the embodiment, the transmission interval of the excitation signal of each of ECUs 5FL to 5RR as performed above is allowed to increase or decrease on the basis of the vehicle-speed data included in the vehicle-speed data signal from the mater ECU 6. Specifically, the transmission interval is allowed to decrease when the vehicle-speed data is higher than a predetermined value. Meanwhile, the transmission interval is allowed to increase when the vehicle-speed data is lower than the predetermined value. In this manner, the transmission signal of the excitation signal of each of the ECUs 5FL to 5RR is allowed to increase or decrease on the basis of the vehicle-speed data. Accordingly, even when the rotating speed of the tire 3FL varies, it is possible to complete the communication between the ECU and the transponder, thereby appropriately receiving the tire state data.

In the tire state monitoring apparatus 1 according to the embodiment as described above, the ECU 5 having the antenna 7 communicates with the transponder 4, and the ECU 5 and the master ECU 6 are connected to each other through the communication line (bus 8). Accordingly, the lengths between the antenna 7 and the RF circuit 22 can be shortened, thereby reducing the cost for the coaxial cable and avoiding the complicatedness in the wiring work of the coaxial cable.

At the time of monitoring the state of the tire 3, after the waiting time, set in the ECUS, differing from those of other ECUs 5 elapses, the communication is performed with the corresponding transponder 4 to acquire the tire state data. Accordingly, even when the tire state data is acquired from the transponder 4 by using the plurality of ECUs 5, it is possible to appropriately monitor the tire state.

In addition, the ECU 5 is synchronized with the synchronization signal outputted from the main ECU 6. Accordingly, even when the data representing the tire state is received from the transponder 4 by using the plurality of ECUs 5, it is prevented to buffer the communication with one another. Consequently, it is possible to accurately monitor the tire state.

The invention is not limited to the above-described embodiment, but may be modified to be variously embodied. In the embodiment, the size, the shape, or the like shown in the attached drawings is not limited thereto, but may be appropriately modified so long as the advantage of the invention can be obtained and be appropriately modified so long as it does not deviate from the object of the invention.

In the tire state monitoring apparatus 1 according to the embodiment, the transponder 4 has the resonator along with the pressure sensor and receives the excitation signal from the ECU 5 to allow the resonator to resonate, and the ECU 5 receives the resonance signal to acquire the tire information data on the basis of the resonance frequency. For example, the signal for requesting the transmission of the tire information data may be transmitted from the ECU 5 to the transponder 4 and the transponder 4 may transmit the tire information data, which is not the form of the resonance signal, to the ECU 5. In addition, a battery for communication or for acquiring the tire information data may be built in the transponder 4. With such a configuration, it is possible to appropriately monitor the tire state while corresponding to a variety of situation variation in the vehicle in a flexible manner.

## Claims

1. A tire state monitoring apparatus comprising:
transponders mounted in a plurality of tires of a vehicle;
a plurality of sub-controllers disposed in a body of the vehicle and acquiring data representing a tire state from the corresponding transponder; and
a main controller connected to the plurality of sub-controllers through communication lines,
the plurality of sub-controllers each including
a communication unit communicating with the corresponding transponder;
an antenna connected to the communication unit; and
a memory recording the waiting time, until communicating with the corresponding transponder, differing from those of other sub-controllers and
the plurality of sub-controllers each communicating with the corresponding transponder after the waiting time elapses, acquiring the data representing the tire state, and outputting the data to the main controller, at the time of monitoring the tire state.

2. The tire state monitoring apparatus according to Claim 1, wherein the sub-controller acquires the data representing the tire state by communicating with the corresponding transponder after the waiting time elapses from a time point when receiving a synchronization signal outputted from the main controller.

3. The tire state monitoring apparatus according to Claim 1 or 2, wherein the waiting time is set to be a period of time by which the communication of the sub-controller does not interfere with those of other sub-controllers.

4. The tire state monitoring apparatus according to one of Claims 1 to 3, wherein the sub-controller communicates with the corresponding transponder plural times within one communication period and modifies intervals of the communication performed within the one communication period.

5. The tire state monitoring apparatus according to Claim 4, wherein the synchronization signal is a vehicle-speed data signal and the sub-controller modifies the intervals of the communication performed within the one communication period on the basis of the vehicle-speed data of the vehicle-speed data signal transmitted from the main controller.

6. The tire state monitoring apparatus according to Claim 5, wherein the sub-controller decreases the intervals of the communication performed within the one communication period when the value of the vehicle-speed data is larger than a predetermined value and increases the intervals of the communication performed within the one communication period when the value of the vehicle-speed data is smaller than the a predetermined value.
